(19) **Europäisches Patentamt / European Patent Office / Office européen des brevets**

(11) **EP 1 532 028 B1**

(12) **FASCICULE DE BREVET EUROPEEN**

(45) Date de publication et mention
de la délivrance du brevet:
**17.03.2010 Bulletin 2010/11**

(51) Int Cl.:
***B60T 7/22*** *(2006.01)* ***B60K 31/18*** *(2006.01)*
***B60K 31/00*** *(2006.01)* ***G01S 13/93*** *(2006.01)*

(21) Numéro de dépôt: **03761612.5**

(22) Date de dépôt: **10.06.2003**

(86) Numéro de dépôt international:
**PCT/FR2003/001726**

(87) Numéro de publication internationale:
**WO 2004/002796 (08.01.2004 Gazette 2004/02)**

(54) **PROCEDE ET SYSTEME D AIDE A LA CONDUITE D UN VEHICULE AUTOMOBILE**

KRAFTFAHRZEUGANTRIEBSHILFEVERFAHREN UND SYSTEM

MOTOR VEHICLE DRIVE ASSISTANCE METHOD AND SYSTEM

(84) Etats contractants désignés:
**AT BE BG CH CY CZ DE DK EE ES FI FR GB GR
HU IE IT LI LU MC NL PT RO SE SI SK TR**

(30) Priorité: **27.06.2002 FR 0208031**

(43) Date de publication de la demande:
**25.05.2005 Bulletin 2005/21**

(73) Titulaire: **Peugeot Citroën Automobiles SA
78943 Vélizy-Villacoublay Cedex (FR)**

(72) Inventeur: **SERVEL, Alain
F-78350 Jouy en Josas (FR)**

(56) Documents cités:
**DE-A- 4 310 354     DE-A- 19 806 687
DE-A- 19 807 748     DE-A- 19 858 292
DE-A- 19 937 818**

EP 1 532 028 B1

**Description**

L'invention concerne un procédé et un système d'aide à la conduite d'un véhicule automobile comportant une étape d'assistance électronique du freinage du véhicule automobile déclenchée lorsque la distance séparant le véhicule automobile d'un obstacle est inférieure à un seuil de déclenchement.

De tels procédés et systèmes sont particulièrement utiles pour éviter la collision de deux véhicules automobiles.

La demande de brevet JP 09-292 686, publiée sous le numéro JP-A-11-124019 divulgue un tel procédé comportant une étape d'assistance au freinage. Dans ce document, l'étape d'assistance au freinage consiste à modifier le ratio d'amplification de la force de freinage appliquée par le conducteur lorsque celui-ci appuie sur la pédale de frein. Cette modification du ratio d'amplification n'est réalisée que lorsque la distance séparant le véhicule à freiner de l'obstacle devient inférieure à un seuil de déclenchement. La détermination de ce seuil de déclenchement est extrêmement importante, car un seuil de déclenchement trop bas entraîne l'activation de l'assistance électronique au freinage dans des situations où cela n'est pas nécessaire, et donc une gêne pour le conducteur. Au contraire, un seuil de déclenchement trop haut risque de conduire à l'inactivation de l'assistance électronique au freinage dans des situations où elle aurait été nécessaire.

Dans les procédés connus, le seuil de déclenchement correspond à la distance de freinage à laquelle est ajoutée une marge de sécurité. La distance de freinage est calculée à partir de l'accélération longitudinale du véhicule automobile, c'est-à-dire à partir de l'accélération dans la direction de déplacement de ce véhicule automobile.

L'invention vise à proposer un autre seuil de déclenchement de l'étape d'assistance électronique au freinage.

Il est précisé ici, qu'une étape d'assistance électronique du freinage d'un véhicule automobile ne doit pas être confondue avec une opération d'enclenchement d'un frein automatique comme décrit par exemple dans le document DE-A-19806 687.

L'invention a donc pour objet un procédé d'aide à la conduite d'un véhicule automobile conforme à l'objet de la revendication 1.

Lorsqu'un véhicule automobile rencontre un obstacle, deux alternatives se présentent au conducteur, soit freiner le véhicule automobile pour l'arrêter avant l'obstacle, soit contourner l'obstacle en braquant les roues du véhicule automobile. Le procédé décrit ci-dessus, contrairement aux procédés existants, fixe le seuil de déclenchement également à partir de la distance nécessaire au conducteur pour contourner l'obstacle. Pour cela, le seuil de déclenchement est établi à partir d'une accélération latérale fixée à l'avance du véhicule dans une direction autre que celle du déplacement du véhicule vers l'obstacle, cette accélération latérale étant choisie de manière à permettre au véhicule automobile de contourner l'obstacle sans difficulté excessive et, par exemple, sans freiner.

Suivant d'autres caractéristiques d'un procédé conforme à l'invention :

- l'étape de calcul consiste à établir le seuil de déclenchement également à partir d'une largeur prédéterminée de l'obstacle,
- l'étape de calcul consiste à établir à partir de l'accélération latérale prédéterminée et de la largeur prédéterminée de l'obstacle un seuil de déclenchement correspondant à la distance parcourue en direction de l'obstacle par le véhicule automobile pendant le temps nécessaire pour se décaler latéralement de la largeur prédéterminée, ajoutée à la distance parcourue par l'obstacle en direction du véhicule automobile pendant ce même temps,
- l'étape d'assistance au freinage comporte une opération d'ajustement d'un seuil d'activation d'un dispositif d'assistance au freinage d'urgence, ce seuil d'activation discriminant une manoeuvre de freinage habituelle réalisée par le conducteur, ne nécessitant pas l'activation du dispositif d'assistance au freinage d'urgence, d'une manoeuvre de freinage d'urgence, nécessitant l'activation du dispositif d'assistance au freinage d'urgence,
- l'opération d'ajustement consiste à modifier le seuil d'activation en prenant en compte au moins la distance séparant le véhicule automobile de l'obstacle,
- l'étape d'assistance au freinage est précédée d'une opération d'alerte du conducteur lorsqu'une manoeuvre de freinage est souhaitable pour éviter l'obstacle,
- l'étape d'assistance au freinage comporte une opération d'enclenchement d'un frein automatique si le conducteur n'a pas entamé une manoeuvre de freinage après l'opération d'alerte,
- il comporte une étape de calcul d'une consigne de décélération à appliquer au véhicule à partir de la distance séparant le véhicule de l'obstacle, et l'étape d'assistance au freinage comporte une opération de freinage assisté, uniquement commandé à partir de la consigne de décélération établie lors de l'opération de calcul d'une consigne de décélération,
- il comporte une étape d'initialisation de la valeur de l'accélération latérale prédéterminée, cette valeur restant ensuite constante quelle que soit la manoeuvre de freinage réalisée à l'aide du véhicule automobile, et
- il comporte une étape d'initialisation de la valeur de la largeur prédéterminée de l'obstacle, cette valeur restant ensuite constante quel que soit l'obstacle rencontré.

L'invention a également pour objet un système d'aide à la conduite d'un véhicule automobile comportant un dispositif électronique apte à assister le freinage du véhicule automobile destiné à être activé lorsque la distance séparant le véhicule automobile d'un obstacle est inférieure à un seuil de déclenchement, caractérisé en ce qu'il comporte un module de calcul du seuil de déclenchement à partir d'une accélération latérale prédéterminée dans une direction non colinéaire à la direction de déplacement du véhicule automobile, cette accélération latérale prédéterminée correspondant à une accélération latérale habituelle de valeur connue permettant le contournement de l'obstacle par braquage des roues du véhicule automobile.

Suivant d'autres caractéristiques d'un système conforme à l'invention :

- le dispositif électronique est apte à assister le freinage du véhicule automobile uniquement après avoir comparé la consigne de décélération transmise par le conducteur à un seuil d'activation du freinage assisté du véhicule automobile, et il comporte un module de calcul de la valeur de ce seuil d'activation à partir de la distance séparant le véhicule automobile de l'obstacle,
- il comporte un module de calcul d'une consigne de décélération minimale à appliquer au véhicule automobile pour éviter la collision avec l'obstacle, et le dispositif est apte à assister le freinage du véhicule automobile uniquement à partir de cette consigne de décélération minimale lorsque la consigne de décélération transmise par le conducteur n'est pas suffisante pour éviter la collision avec l'obstacle.

L'invention sera mieux comprise à la lecture de la description qui va suivre, donnée uniquement à titre d'exemple, et faite en se référant aux dessins, sur lesquels :

- la figure 1 est une illustration schématique de l'architecture d'un système d'aide à la conduite d'un véhicule automobile conforme à l'invention, et
- la figure 2 est un organigramme d'un procédé d'aide à la conduite d'un véhicule automobile conforme à l'invention.

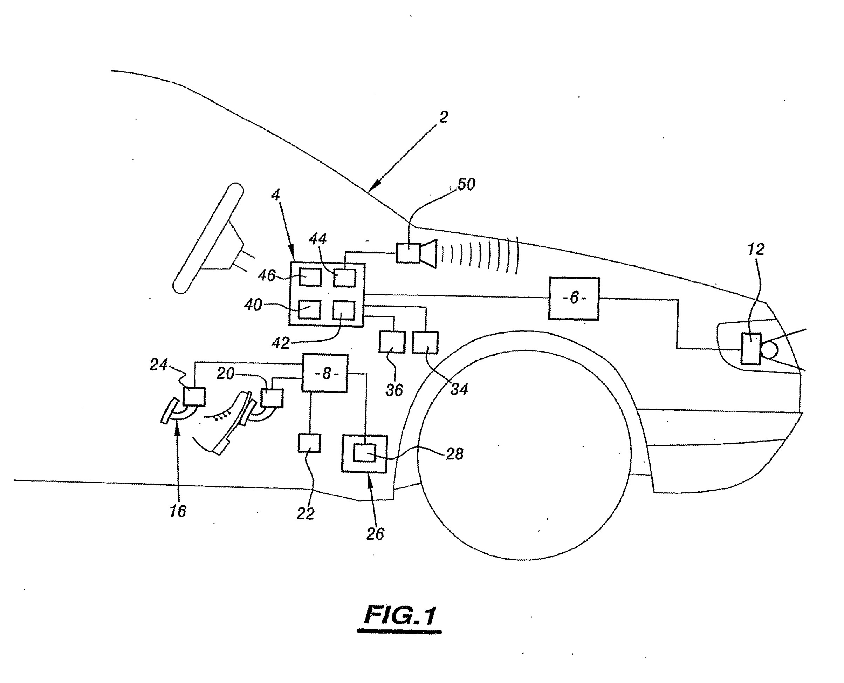

La figure 1 représente un véhicule automobile 2 équipé d'un calculateur embarqué 4 raccordé à un régulateur 6 de vitesse intelligent et à un dispositif électronique 8 d'assistance au freinage d'urgence.

Le régulateur 6 de vitesse intelligent, également connu sous les termes de système ACC (Adaptive Cruise Control) est destiné à maintenir en permanence une distance de sécurité entre le véhicule 2 et un véhicule qui le précède. A cet effet, le régulateur 6 est raccordé à un radar 12 disposé à l'avant du véhicule automobile 2. Ce radar 12 est apte à mesurer la position et la vitesse d'un obstacle situé devant le véhicule 2. Ce radar est, par exemple, un radar frontal 77 GHz.

Le régulateur 6 est adapté pour calculer la distance Dc à laquelle se situe l'obstacle à prendre en compte, ainsi que la vitesse Vc et l'accélération Ac de cet obstacle à prendre en compte. Si plusieurs obstacles sont détectés par le radar 12, le régulateur est propre à sélectionner l'obstacle à prendre en compte en utilisant, par exemple, les règles suivantes :

- si tous les obstacles détectés par le radar 12 ont la même vitesse, c'est l'obstacle le plus proche du véhicule 2 qui est sélectionné ; sinon,
- c'est le véhicule ayant la plus petite vitesse inférieure à celle du véhicule 2.

Le régulateur 6 est apte à délivrer, au calculateur 4, la distance Dc à laquelle se situe l'obstacle, la vitesse Vc de l'obstacle, et l'accélération Ac de l'obstacle.

Le dispositif 8 d'assistance au freinage d'urgence est destiné à déclencher un freinage assisté dès que le conducteur appuie sur une pédale de frein 16 du véhicule 2 de manière rapide. Pour cela, le dispositif 8 est raccordé aux éléments suivants du véhicule 2 :

- un capteur 20 de position et de vitesse de déplacement de la pédale de frein 16,
- un capteur 22 de la force d'appui exercée par le conducteur sur la pédale de frein 16,
- un détecteur 24 de la présence du pied du conducteur sur la pédale d'accélération du véhicule 2, et
- un dispositif classique 26 de freinage du véhicule 2.

Le dispositif de freinage 26 comporte ici, par exemple, un amplificateur 28 de la force de freinage exercée par le conducteur sur la pédale de frein 16. Le ratio d'amplification de cet amplificateur 28 est propre à être commandé à partir du dispositif 8.

Le dispositif 8 comporte un seuil d'activation du freinage assisté Sf ajustable sous la commande du calculateur 4. Le dispositif 8 est apte à calculer, à partir des informations délivrées par les capteurs 20 et 22, la puissance de freinage Pwf exercée par le conducteur sur la pédale de frein 16 et à comparer cette puissance Pwf au seuil Sf pour en déduire une commande de réglage du ratio d'amplification de l'amplificateur 8.

Le calculateur 4 est destiné à assister le freinage du véhicule 2 en commandant le dispositif 8 d'assistance au freinage d'urgence à partir d'informations recueillies par le régulateur 6 de vitesse intelligent. A cette fin, ce calculateur 4 est également raccordé à un gyromètre 34 et à un capteur 36 de la vitesse et de l'accélération du véhicule 2. Le gyromètre 34 est propre à mesurer l'accélération radiale ou latérale du véhicule 2, tandis que le capteur 36 est propre à mesurer l'accélération et la vitesse longitudinale ou tangentielle à la direction de déplacement du véhicule 2.

Le calculateur 4 comporte un module 40 de calcul d'un seuil Da de déclenchement de l'assistance au freinage, un module 42 de calcul d'une consigne Cd de décélération, un module 44 d'alerte du conducteur et un module 46 de calcul de la valeur du seuil d'activation Sf.

Le module 40 établit un seuil Da égal à une distance en deçà de laquelle l'évitement de l'obstacle par braquage des roues du véhicule sort du domaine du confort habituel. Cette distance correspond donc à une distance séparant le véhicule 2 de l'obstacle en dessous de laquelle un freinage d'urgence doit être assisté.

Le seuil Da est, par exemple, déterminé à l'aide de la formule suivante :

$$Da = De + (Vveh - Vc).Te$$

où :

- Te est le temps nécessaire pour réaliser la manoeuvre de contournement ou d'évitement de l'obstacle,
- De est la distance parcourue par le véhicule 2 en direction de l'obstacle pendant le temps Te,
- Vveh est la vitesse du véhicule 2, et
- Vc est la vitesse de l'obstacle.

La valeur de Te est, par exemple, déterminée à l'aide de la formule suivante :

$$Te = \sqrt{\frac{2 \cdot Lv}{Alat}}$$

où :

- Lv est la distance à parcourir dans la direction perpendiculaire à la direction de déplacement du véhicule pour éviter l'obstacle, et
- Alat est l'accélération latérale, c'est-à-dire dans une direction orthogonale à la direction de déplacement du véhicule 2, admissible lors d'une manoeuvre de contournement habituelle et confortable.

Dans l'exemple de mode de réalisation décrit ici, Lv et Alat sont constants, quelle que soit la manoeuvre de contournement à entreprendre et quel que soit l'obstacle à contourner. A titre d'exemple, Alat est ici fixé à 2 m/s$^2$ et Lv est fixé égal à la largeur d'une voie de circulation, c'est-à-dire approximativement 3, 5 m.

La valeur de De est calculée, par exemple, selon la relation suivante :

$$De = Vveh \times Te$$

Le terme (Vveh - Vc) x Te correspond à la vitesse à laquelle se rapproche l'obstacle du véhicule 2.

La consigne Cd, établie par le module 42, correspond au seuil minimum de décélération à appliquer au véhicule 2 pour que celui-ci n'entre pas en collision avec l'obstacle. Le module 42 est propre à établir cette consigne Cd à partir de la position, la vitesse et l'accélération de l'obstacle. Par exemple, Cd est calculé selon la formule suivante :

$$Cd = Kv \cdot (Vveh-Vc)^2/[2 \cdot (Dc-Dmarge)] - Kd \cdot (Dc-Ds) - Ka \cdot Ac$$

avec :

- Kv = 1 si Vc < Vveh ;
- Kv = 0 si Vc > Veh ;
- Kd = -1 m/s$^2$/Ds ;
- Ka = 1 si Dc < Ds ;
- Ka = Ds/Dc si Dc > DS

où :

- Dmarge est une marge de sécurité permettant d'établir une consigne Cd conduisant à l'immobilisation du véhicule plusieurs mètres avant le point de collision avec l'obstacle, Dmarge est, par exemple, fixé à 5 m,
- Ds est la distance de sécurité calculée selon la formule suivante : Ds = Vveh . Tr, où Tr est le temps de réaction du conducteur.

Le module 44 est destiné à calculer une distance d'alerte Dw en deçà de laquelle le conducteur est informé qu'une manoeuvre de freinage ou de contournement de l'obstacle doit être entreprise. A cet effet, ce module d'alerte 44 est raccordé, par exemple, à un dispositif 50 d'alerte sonore, tel qu'un buzzer ou un haut-parleur.

Le module 46 est propre à établir la valeur à laquelle le seuil Sf du dispositif 8 doit être ajusté par le calculateur 4. Ce module 46 établit par exemple cette valeur selon la formule suivante :

$$Sf = Smax.(Cdmax - Cd)/Cdmax$$

avec : Cd < Cdmax
où :

- Smax est la valeur du seuil Sf lorsque la distance Dc entre l'obstacle et le véhicule 2 est supérieure au seuil de déclenchement Da calculé par le module 40, ce seuil Smax est ici fixé à 16 W,
- Cdmax est la consigne de décélération maximale qui peut être appliquée au véhicule 2. Cette consigne de décélération maximale est fixée à 9 m/s$^2$.

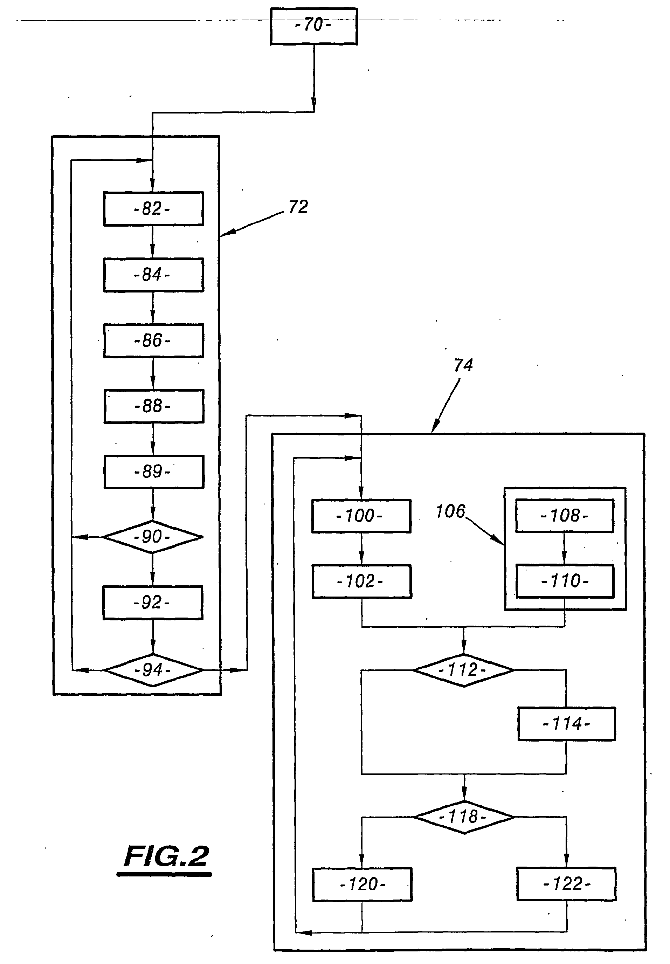

Le fonctionnement du système d'aide à la conduite du véhicule 2 va maintenant être décrit à l'aide de la figure 1 et en regard de la figure 2.

Lors de l'installation du système d'aide à la conduite du véhicule 2, un opérateur réalise une étape 70 d'initialisation de l'accélération latérale Alat et de la largeur de l'obstacle à éviter Lv. Ces deux paramètres sont constants et indépendants du temps.

Ensuite, lorsque le véhicule 2 se déplace, le calculateur 4 réalise, en boucle, une étape de traitement des données mesurées qui peut, si la situation l'exige, déclencher une étape 74 d'assistance au freinage du véhicule.

L'étape 72 débute par une opération 80 d'acquisition des données délivrées par le régulateur 6 et par les capteurs 34 et 36. Le régulateur 6 ne délivre que les données relatives à l'obstacle pertinent à prendre en compte. En effet, avant l'opération 80, le régulateur 6 réalise une opération de sélection de l'obstacle à prendre en compte parmi les différents obstacles présents devant le véhicule 2.

Ensuite, le module 40 réalise une opération 84 de calcul du seuil Da à partir des données mesurées lors de l'opération 80. Cette opération 84 est suivie d'une opération 86 de calcul de la consigne Cd par le module 42, d'une opération 88 de calcul de la distance d'alerte Dw par le module 44 et d'une opération 89 de calcul de la valeur de seuil Sf par le module 46.

Après ces différentes opérations de calcul, le calculateur 4 procède à une étape 90 de comparaison de la distance Dc et la distance d'alerte Dw. Si cette distance Dc est supérieure à Dw, alors le calculateur retourne à l'opération 80.

Si la distance Dc est inférieure à Dw, le calculateur procède à l'opération 92 d'alerte du conducteur. Lors de cette opération 92, le module 44 active le dispositif sonore 50 ou maintient ce dispositif sonore activé de manière à informer le conducteur qu'une opération de freinage ou une manoeuvre de contournement est souhaitable.

A l'issue de cette opération 92, le calculateur 4 réalise une seconde opération 94 de comparaison de la distance Dc séparant le véhicule 2 de l'obstacle au seuil de déclenchement Da. Si la distance Dc est supérieure au seuil de déclenchement Da, le calculateur retourne à l'opération 80 sans déclencher l'étape 74 d'assistance au freinage. Dans le cas contraire, c'est-à-dire si la distance Dc est inférieure à la distance Da, alors le calculateur 4 déclenche l'étape 74 d'assistance au freinage, puis retourne à l'opération 80. Ainsi, l'étape 72 s'exécute toujours en boucle pour réactualiser en permanence les seuils Da, Dw et les valeurs Cd, Sf.

L'étape 74 d'assistance au freinage consiste, ici, à ajuster le seuil Sf d'activation du dispositif 8 de freinage d'urgence et à commander, si nécessaire, ce dispositif 8. A cet effet, l'étape 74 débute par une opération 100 d'ajustement du seuil Sf du dispositif 8 à la valeur calculée lors de l'opération 89. Cette opération 100 se poursuit par une opération 102 de délivrance au dispositif 8 de la consigne Cd calculée lors de l'opération 86.

Parallèlement aux opérations 100 et 102, le dispositif 8 d'assistance au freinage d'urgence réalise en permanence une étape 106 d'analyse des informations délivrées par les capteurs 20 à 24. Cette étape d'analyse 106 comporte principalement deux opérations, une opération 108 de détection de la présence du pied du conducteur sur la pédale d'accélération et une opération 110 de détermination de la puissance de freinage appliquée par le conducteur sur la pédale de frein 16. Lors de l'opération 110, la puissance de freinage Pwf est déterminée à partir des informations transmises par les capteurs 20 et 22.

Ensuite, pour assister le conducteur lors de son freinage, le dispositif 8 réalise une opération 112 d'enclenchement éventuel d'un frein automatique. Lors de cette opération 112, le dispositif 8 vérifie si le capteur 24 indique que le conducteur n'a pas le pied sur la pédale d'accélération et si l'opération 92 d'alerte du conducteur est en cours. Dans le cas où ces deux conditions sont réunies simultanément, le dispositif 8 procède à une opération 114 d'enclenchement d'un frein automatique. Cette opération consiste ici à imposer une décélération minimale au véhicule 2, par exemple, $1,2 \text{ m/s}^2$. Dans le cas contraire, aucune décélération minimale n'est imposée au véhicule 2.

A l'issue de l'opération 114, ou si les conditions pour l'enclenchement d'un frein automatique n'étaient pas réunies, directement à l'issue de l'opération 112, le dispositif 8 réalise une opération 118 de comparaison de la puissance de freinage Pwf au seuil d'activation Sf ajusté lors de l'opération 100.

Dans le cas où la puissance Pwf est supérieure au seuil Sf, la puissance de freinage appliquée par le conducteur est suffisante et le dispositif 8 procède à une première opération 120 de freinage assisté.

Dans le cas contraire, c'est-à-dire si la puissance de freinage appliquée par le conducteur est inférieure au seuil Sf, le dispositif 8 procède à une seconde opération 122 de freinage assisté.

Lors des première et seconde opérations 120 et 122, le dispositif agit sur l'amplificateur 28 pour accroître le ratio d'amplification de la force de freinage sans que celui-ci puisse dépasser une limite supérieure correspondant à la consigne de décélération Cdmax.

Lors de l'opération 120, l'accroissement du ratio d'amplification, commandé par le dispositif 8, est uniquement déterminé à partir des consignes de freinage transmises par le conducteur à l'aide de la pédale de frein 16.

Lors de l'opération 122, la puissance de freinage Pwf, appliquée par le conducteur étant insuffisante pour éviter la collision, le dispositif 8 utilise la consigne Cd transmise par le calculateur 4 pour établir le nouveau ratio d'amplification de l'amplificateur 28.

A l'issue de l'opération 120 ou 122, le dispositif 8 retourne à l'opération 100. Ainsi, tant que l'étape d'assistance au freinage n'est pas terminée, les valeurs du seuil Sf et de la consigne Cd sont réactualisées lors des opérations 100, 102 à partir des valeurs les plus récentes calculées lors des opérations 86 et 89.

Finalement, après la manoeuvre de freinage assisté, par exemple, lorsque la distance séparant le véhicule 2 de l'obstacle devient à nouveau supérieure au seuil de déclenchement Da, ou lorsque le conducteur a levé le pied de la pédale de frein, l'étape 74 d'assistance au freinage s'achève en rétablissant le seuil de déclenchement Sf à sa valeur initiale Smax.

Puisque l'étape 106 d'analyse des manoeuvres de freinage du conducteur est réalisée en permanence, l'opération 120 de freinage assisté est également déclenchée lorsque le conducteur exerce, sur la pédale de frein, une puissance de freinage supérieure au seuil Smax, même si aucun obstacle gênant n'avait été détecté lors de l'étape 72.

Des études ont montré que près de 21 % des conducteurs d'un véhicule équipé uniquement d'un dispositif d'assistance au freinage d'urgence, tel que le dispositif 8, n'active pas l'opération de freinage assisté. En effet, dans ces véhicules, le seuil de déclenchement du freinage assisté est fixé à la valeur Smax. Par conséquent, si le conducteur n'appuie pas de façon énergique sur la pédale de frein pour exercer une puissance de freinage Pwf supérieure à Smax, le dispositif de freinage assisté n'intervient pas ou trop tard. C'est notamment le cas lorsqu'un conducteur évalue mal la position et la vitesse de l'obstacle et freine trop doucement au début pour éviter la collision. A l'aide du système décrit ci-dessus, de tels dysfonctionnements ne se produisent pas. En effet, le seuil d'activation Sf du dispositif d'assistance au freinage d'urgence est adapté en fonction de la situation détectée par des capteurs. Ainsi, même si le conducteur freine insuffisamment au début de la manoeuvre de freinage, ceci active quand même le dispositif d'assistance au freinage d'urgence, puisque le seuil d'activation aura préalablement été diminué.

**Revendications**

**1.** Procédé d'aide à la conduite d'un véhicule automobile (2) comportant une étape (74) d'assistance électronique du freinage du véhicule automobile déclenchée lorsque la distance séparant le véhicule automobile d'un obstacle est inférieure à un seuil de déclenchement,

**caractérisé en ce qu'**il comporte une étape (84) de calcul à partir d'une accélération latérale prédéterminée dans une direction non colinéaire à la direction de déplacement du véhicule automobile, cette accélération latérale prédéterminée correspondant à une accélération latérale habituelle de valeur connue permettant le contournement de l'obstacle par braquage des roues du véhicule automobile et, d'une largeur prédéterminée de l'obstacle, du seuil de déclenchement pour correspondre à la distance parcourue en direction de l'obstacle par le véhicule automobile (2) pendant le temps nécessaire pour se décaler latéralement de la largeur prédéterminée, ajoutée à la distance parcourue par l'obstacle en direction du véhicule automobile pendant ce même temps.

2. Procédé selon la revendication 1, **caractérisé en ce que** l'étape (74) d'assistance au freinage comporte une opération (100) d'ajustement d'un seuil d'activation d'un dispositif (8) d'assistance au freinage d'urgence, ce seuil d'activation discriminant une manoeuvre de freinage habituelle réalisée par le conducteur, ne nécessitant pas l'activation du dispositif d'assistance au freinage d'urgence, d'une manoeuvre de freinage d'urgence, nécessitant l'activation du dispositif d'assistance au freinage d'urgence.

3. Procédé selon la revendication 2, **caractérisé en ce que** l'opération (100) d'ajustement consiste à modifier le seuil d'activation en prenant en compte au moins la distance séparant le véhicule automobile (2) de l'obstacle.

4. Procédé selon l'une quelconque des revendications précédentes, **caractérisé en ce que** l'étape (74) d'assistance au freinage est précédée d'une opération (92) d'alerte du conducteur lorsqu'une manoeuvre de freinage est souhaitable pour éviter l'obstacle.

5. Procédé selon la revendication 4, **caractérisé en ce que** l'étape (74) d'assistance au freinage comporte une opération (114) d'enclenchement d'un frein automatique si le conducteur n'a pas entamé une manoeuvre de freinage après l'opération d'alerte (92).

6. Procédé selon l'une quelconque des revendications précédentes, **caractérisé :**

   - **en ce qu'**il comporte une étape (86) de calcul d'une consigne de décélération à appliquer au véhicule (2) à partir de la distance séparant le véhicule (2) de l'obstacle, et
   - **en ce que** l'étape (74) d'assistance au freinage comporte une opération (122) de freinage assisté, uniquement commandé à partir de la consigne de décélération établie lors de l'opération (86) de calcul d'une consigne de décélération.

7. Procédé selon l'une quelconque des revendications précédentes, **caractérisé en ce qu'**il comporte une étape (70) d'initialisation de la valeur de l'accélération latérale prédéterminée, cette valeur restant ensuite constante quelle que soit la manoeuvre de freinage réalisée à l'aide du véhicule automobile.

8. Procédé selon l'une quelconque des revendications précédentes, **caractérisé en ce qu'**il comporte une étape (70) d'initialisation de la valeur de la largeur prédéterminée de l'obstacle, cette valeur restant ensuite constante quel que soit l'obstacle rencontré.

9. Système d'aide à la conduite d'un véhicule automobile (2), comportant un dispositif électronique (8) apte à assister le freinage du véhicule automobile destiné à être activé lorsque la distance séparant le véhicule automobile d'un obstacle est inférieure à un seuil de déclenchement,
   **caractérisé en ce qu'**il comporte un module (40) de calcul, à partir d'une accélération latérale prédéterminée dans une direction non colinéaire à la direction de déplacement du véhicule automobile, cette accélération latérale prédéterminée correspondant à une accélération latérale habituelle de valeur connue permettant le contournement de l'obstacle par braquage des roues du véhicule automobile, et d'une largeur prédéterminée de l'obstacle, du seuil de déclenchement pour correspondre à la distance parcourue en direction de l'obstacle par le véhicule automobile (2) pendant le temps nécessaire, pour se décaler latéralement de la largeur prédéterminée, ajoutée à la distance parcourue par l'obstacle en direction du véhicule automobile pendant ce même temps.

10. Système selon la revendication 9, **caractérisé :**

    **en ce que** le dispositif électronique (8) est apte à assister le freinage du véhicule automobile (2) uniquement après avoir comparé la consigne de décélération transmise par le conducteur à un seuil d'activation du freinage assisté du véhicule automobile (2), et
    - en ce qu'il comporte un module (89) de calcul de la valeur de ce seuil d'activation à partir de la distance séparant le véhicule automobile (2) de l'obstacle.

**11.** Système selon la revendication 9 ou 10, **caractérisé :**

- **en ce qu'**il comporte un module (44) dé calcul d'une consigne de décélération minimale à appliquer au véhicule automobile (2) pour éviter la collision avec l'obstacle, et
- **en ce que** le dispositif (8) est apte à assister le freinage du véhicule automobile uniquement à partir de cette consigne de décélération minimale lorsque la consigne de décélération transmise par le conducteur n'est pas suffisante pour éviter la collision avec l'obstacle.

**Claims**

**1.** Method to assist with driving a motor vehicle (2), comprising a step (74) of electronically assisting the braking of the motor vehicle which is initiated when the distance separating the motor vehicle from on obstacle is less than initiation threshold
**characterized in that** it includes a step (84) of calculating, from a predetermined lateral acceleration in a direction not collinear with the direction of travel of the motor vehicle, this predetermined lateral acceleration corresponding to a customary lateral acceleration of known value that will allow the obstacle to be avoided by turning the wheels of the motor vehicle, and the from a predetermined width of the obstacle, the initiation threshold so as to correspond to the distance covered by the motor vehicle (2) in the direction of the obstacle during the time needed to shift laterally by the predetermined width, added to the distance covered by the obstacle in the direction of the motor vehicle during this same space of time.

**2.** Method according to Claim 1, **characterized in that** the step (74) of assisting the braking includes an operation (100) of adjusting an activation threshold of an emergency brake assist device (8), this activation threshold discriminating between a customary braking manoeuvre performed by the driver and that does not entail activating the emergency brake assist device, and an emergency braking manoeuvre that does entail activating the emergency brake assist device.

**3.** Method according to Claim 2, **characterized in that** the adjustment operation (100) consists in modifying the activation threshold to take account at least of the distance separating the motor vehicle (2) from the obstacle.

**4.** Method according to any one of the preceding claims, **characterized in that** the step (74) of assisting with braking is preceded by an operation (92) of warning the driver when a braking manoeuvre is desirable in order to avoid the obstacle.

**5.** Method according to Claim 4, **characterized in that** the step (74) of assisting with braking includes an operation (114) of engaging an automatic brake if the driver has not begun a braking manoeuvre after the warning operation (92).

**6.** Method according to any one of the preceding claims, **characterized:**

- **in that** it includes a step (86) of calculating a deceleration instruction to be applied to the vehicle (2) on the strength of the distance separating the vehicle (2) from the obstacle, and
- **in that** the step (74) of assisting with braking includes an assisted braking operation (122) demanded on the basis of the deceleration instruction established during the operation (86) of calculating the deceleration instruction.

**7.** Method according to any one of the preceding claims, **characterized in that** it includes a step (70) of initializing the value of the predetermined lateral acceleration, this value then remaining constant irrespective of the braking manoeuvre performed using the motor vehicle.

**8.** Method according to any one of the preceding claims, **characterized in that** it comprises a step (70) of initializing the value of the predetermined width of the obstacle, this value then remaining constant irrespective of the obstacle encountered.

**9.** System for assisting with driving a motor vehicle (2) and comprising an electronic device (8) able to assist with braking the motor vehicle and intended to be activated when the distance separating the motor vehicle from an obstacle is less than an initiation threshold,
**characterized in that** it comprises a module (40) for calculating, from a predetermined lateral acceleration in a direction not collinear with the direction of travel of the motor vehicle, this predetermined lateral acceleration corresponding to a customary lateral acceleration of known value allowing the obstacle to be avoided by turning the wheels of the motor vehicle, and from a predetermined width of the obstacle, the initiation threshold to correspond to the distance covered by the motor vehicle (2) in the direction of the obstacle during the time taken to shift laterally by the predetermined width, added to the distance covered by the obstacle in the direction of the motor vehicle during this same space of time.

10. System according to Claim 9, **characterized:**

   - **in that** the electronic device (8) is able to assist with the braking of the motor vehicle (2) only once the deceleration instruction transmitted by the driver has been compared against a threshold to activate the assisted braking of the motor vehicle (2), and
   - **in that** it comprises a module (89) for calculating the value of this activation threshold from the distance separating the motor vehicle (2) from the obstacle.

11. System according to Claim 9 or 10, **characterized:**

   - **in that** it comprises a module (44) for calculating the minimum deceleration instruction to be applied to the motor vehicle (2) to avoid colliding with the obstacle, and
   - **in that** the device (8) is able to assist with braking the motor vehicle only on the strength of this minimum deceleration instruction when the deceleration instruction transmitted by the driver is not enough to avoid colliding with the obstacle.

**Patentansprüche**

1. Lenkunterstützungsverfahren für ein Kraftfahrzeug (2) mit einem Schritt (74) der elektronischen Unterstützung der Bremskraft des Kraftfahrzeugs, wenn der das Kraftfahrzeug von einem Hindernis trennende Abstand unter einer Auslöseschwelle liegt,
   **dadurch gekennzeichnet, dass** es einen Schritt (84) des Berechnens anhand einer vorbestimmten Seitenbeschleunigung in einer zur Bewegungsrichtung des Kraftfahrzeugs nicht kollinearen Richtung, wobei diese vorbestimmte Seitenbeschleunigung einer gewöhnlichen Seitenbeschleunigung mit einem bekannten Wert entspricht, die das Umgehen eines Hindernisses durch Einschlag der Räder des Kraftfahrzeugs gestattet, und einer vorbestimmten Breite des Hindernisses, der Auslöseschwelle, um der in Richtung des Hindernisses von dem Kraftfahrzeug (2) zurückgelegten Strecke während der Zeit, die erforderlich ist, um sich seitlich um die vorbestimmten Breite zu verschieben, addiert zu der während dieser gleichen Zeit von dem Hindernis in Richtung des Kraftfahrzeugs zurückgelegten Strecke, zu entsprechen, umfasst.

2. Verfahren nach Anspruch 1, **dadurch gekennzeichnet, dass** der Schritt (74) der Bremskraftunterstützung einen Vorgang (100) des Einstellens einer Aktivierungsschwelle einer Notbremskraftunterstützungsvorrichtung (8) umfasst, wobei diese Aktivierungsschwelle ein gewöhnliches, von dem Fahrer durchgeführtes Bremsmanöver von einem Notbremsmanöver, das keine Aktivierung der Notbremskraftunterstützungsvorrichtung erfordert, von einem Notbremsmanöver, das die Aktivierung der Notbremskraftunterstützungsvorrichtung erfordert, unterscheidet.

3. Verfahren nach Anspruch 2, **dadurch gekennzeichnet, dass** der Vorgang (100) des Einstellens in dem Modifizieren der Aktivierungsschwelle unter Berücksichtigung mindestens des das Kraftfahrzeug (2) von dem Hindernis trennenden Abstands besteht.

4. Verfahren nach einem der vorhergehenden Ansprüche, **dadurch gekennzeichnet, dass** dem Bremskraftunterstützungsschritt (74) ein Vorgang (92) der Warnung des Fahrers bei einem zur Vermeidung des Hindernisses wünschenswerten Bremsmanöver vorausgeht.

5. Verfahren nach Anspruch 4, **dadurch gekennzeichnet, dass** der Bremskraftunterstützungsschritt (74) einen Vorgang (114) des Einschaltens einer automatischen Bremse, wenn der Fahrer nach dem Warnvorgang (92) kein Bremsmanöver begonnen hat, umfasst.

**6.** Verfahren nach einem der vorhergehenden Ansprüche, **dadurch gekennzeichnet, dass**:

- es einen Schritt (86) des Berechnens einer Soll-Verzögerung, mit der das Fahrzeug (2) beaufschlagt werden soll, anhand des das Fahrzeug (2) von dem Hindernis trennenden Abstands, umfasst, und
- der Bremskraftunterstützungsschritt (74) einen Bremskraftunterstützungsvorgang (122) umfasst, der einzig anhand der bei dem Vorgang (86) des Berechnens einer Soll-Verzögerung erstellten Soll-Verzögerung angefordert wird.

**7.** Verfahren nach einem der vorhergehenden Ansprüche, **dadurch gekennzeichnet, dass** es einen Schritt (70) des Einleitens des vorbestimmten Seitenbeschleunigungswerts umfasst, wobei dieser Wert danach unabhängig von dem mit Hilfe des Kraftfahrzeugs durchgeführten Bremsmanöver konstant bleibt.

**8.** Verfahren nach einem der vorhergehenden Ansprüche, **dadurch gekennzeichnet, dass** es einen Schritt (70) des Initialisierens des vorbestimmten Werts der Breite des Hindernisses umfasst, wobei dieser Wert danach unabhängig von dem angetroffenen Hindernis konstant bleibt.

**9.** Lenkunterstützungssystem für ein Kraftfahrzeug (2) mit einer elektronischen Vorrichtung (8), die das Bremsen des Kraftfahrzeugs unterstützen kann und die aktiviert werden soll, wenn der das Kraftfahrzeug von einem Hindernis trennende Abstand unter einer Auslöseschwelle liegt, **dadurch gekennzeichnet, dass** es ein Modul (40) zum Berechnen anhand einer vorbestimmten Seitenbeschleunigung in einer zur Bewegungsrichtung des Kraftfahrzeugs nicht kollinearen Richtung, wobei diese vorbestimmte Seitenbeschleunigung einer gewöhnlichen Seitenbeschleunigung mit einem bekannten Wert entspricht, die das Umgehen eines Hindernisses durch Einschlag der Räder des Kraftfahrzeugs gestattet, und einer vorbestimmten Breite des Hindernisses, der Auslöseschwelle, um der in Richtung des Hindernisses von dem Kraftfahrzeug (2) zurückgelegten Strecke während der Zeit, die erforderlich ist, um sich seitlich um die vorbestimmte Breite zu verschieben, addiert zu der während dieser gleichen Zeit von dem Hindernis in Richtung des Kraftfahrzeugs zurückgelegten Strecke, zu entsprechen, umfasst.

**10.** System nach Anspruch 9, **dadurch gekennzeichnet, dass**:

- die elektronische Vorrichtung (8) das Bremsen des Kraftfahrzeugs (2) einzig nach vorgenommenem Vergleich der von dem Fahrer übermittelte Soll-Verzögerung mit einer Aktivierungsschwelle für die Bremskraftunterstützung des Kraftfahrzeugs (2) unterstützen kann, und
- es ein Modul (89) zum Berechnen des Wertes dieser Aktivierungsschwelle anhand des das Kraftfahrzeug (2) von dem Hindernis trennenden Abstands umfasst.

**11.** System nach Anspruch 9 oder 10, **dadurch gekennzeichnet, dass**:

- es eine Modul (44) zum Berechnen einer minimalen Soll-Verzögerung, mit der das Kraftfahrzeug (2) beaufschlagt werden soll, um die Kollision mit dem Hindernis zu vermeiden, umfasst, und
- die Vorrichtung (8) das Bremsen des Kraftfahrzeugs einzig anhand dieser minimalen Soll-Verzögerung unterstützen kann, wenn die von dem Fahrer übermittelte Soll-Verzögerung nicht ausreicht, um die Kollision mit dem Hindernis zu vermeiden.

FIG.1

**_FIG.2_**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 9292686 A
- JP 11124019 A

- DE 19806687 A